# EUROPEAN PATENT APPLICATION

(11) **EP 2 696 536 A1**
(43) Date of publication of application: **12.02.2014**
(21) Application number: 13003130.5
(22) Date of filing: 19.06.2013
(51) Int. Cl.: H04L 12/26, H04L 12/24, H04L 12/801

(54) **Buffer statistics tracking**

(30) Priority: 07.08.2012 US 201261680478 P; 27.09.2012 US 201213628394
(71) Applicant: Broadcom Corporation, Irvine, CA 92617 (US)
(72) Inventor: Kwan, Bruce, Sunnyvale, CA 94087 (US); Agarwal, Puneet, Cupertino, CA 95015 (US); Kalkunte, Mohan, Saratoga, CA 95070 (US); Lund, Martin, Los Altos Hills, CA 94022 (US); Matthews, Brad, San Jose, CA 95134 (US)
(74) Representative: Jehle, Volker Armin

(57) **Abstract**

The systems and methods disclosed herein allow for a switch (in a packet-switching network) to track buffer statistics, and trigger an event, such as a hardware interrupt or a system snapshot, in response to the buffer statistics reaching a threshold that may indicate an impending problem. Since the switch itself triggers the event to alert the network administrator, the network administrator no longer needs to sift through mountains of data to identify potential problems. Also, since the switch triggers the event prior to a problem arising, the network administrator can provide remedial action prior to a problem occurring. This type of event-triggering mechanism makes the administration of packet-switching networks more manageable.

## Description

### BACKGROUND

### FIELD OF THE DISCLOSURE

The present disclosure relates generally to packet-switching networks and, more particularly, to systems and methods for tracking buffer statistics of switches.

### DESCRIPTION OF RELATED ART

Typically, in packet-switching networks, switches maintain buffer statistics that can be polled by network administrators. Thus, the network administrator would periodically poll the buffer statistics from the switches to identify any potential issues that may require the attention of the network administrator. Alternatively, the network administrator would poll the buffer statistics in response to a problem that has arisen with reference to a particular switch. Unfortunately, for large networks having hundreds (or even thousands) of switches, the amount of polled data can be staggering, and reviewing the sheer volume of data can be a herculean task.

### BRIEF SUMMARY OF THE INVENTION

According to an aspect, in a switch having a buffer, a method comprises:
(a) determining a type of statistic, the type of statistic being at least one selected from the group consisting of:
   (a1) current use-count; and
   (a2) maximum use-count;
(b) tracking a use-count for the determined type of statistic, the use-count being at least one selected from the group consisting of:
   (b1) an egress use-count;
   (b2) an ingress use-count; and
   (b3) a device use-count;
(c) comparing the use-count with a corresponding threshold; and
(d) triggering an event when the use-count exceeds the corresponding threshold.

Advantageously, the method further comprises:
(e) receiving a reset command; and
(f) resetting the use-count in response to the reset command.

According to an aspect, a system comprises:
a use-count register to store a use-count associated with a buffer;
a threshold register to store a threshold corresponding to the use-count; and
a memory management unit (MMU) to compare the use-count with the threshold, the MMU to trigger an event when the use-count exceeds the threshold.

Advantageously, the use-count register to further store an egress use-count.

Advantageously, the egress use-count being at least one selected from the group consisting of:
an egress unicast (UC) queue use-count;
an egress queue-group shared use-count;
an egress port use-count;
an egress multicast (MC) buffer-pool (BP) use-count;
an egress UC plus MC (UC+MC) BP use-counts; and
an egress central processing unit (CPU) queue use-count.

Advantageously, the use-count register to further store an ingress use-count.

Advantageously, the ingress use-count being at least one selected from the group consisting of:
an ingress port and priority group (PG) unicast plus multicast (UC+MC) shared use-count;
an ingress port PG headroom use-count;
an ingress port buffer pool (BP) UC+MC shared use-count; and
an ingress BP UC+MC shared use-count.

Advantageously, the use-count register to further store a device use-count.

Advantageously, the event being a hardware central processing unit (CPU) interrupt.

Advantageously, the event being a command to stop updating the use-count.

Advantageously, the event being a dedicated bit being set to indicate that the use-count exceeded the threshold.

According to an aspect, in a network switch, a method comprises:
tracking a use-count associated with a buffer;
determining whether the tracked use-count exceeds a predefined threshold; and
triggering an event when the use-count exceeds the predefined threshold.

Advantageously, the triggering of the event comprises:
issuing a central processor unit (CPU) interrupt.

Advantageously, the triggering of the event comprises:
stopping updates of the use-count.

Advantageously, the triggering of the event comprises:
setting a dedicated bit to indicate that the use-count exceeded the predefined threshold.

Advantageously, the tracking of the use-count comprises:
tracking an egress use-count.

Advantageously, the tracking of the egress use-count comprises at least one step selected from the group consisting of:
tracking an egress unicast (UC) queue use-count;
tracking an egress queue-group shared use-count;
tracking an egress port use-count;
tracking an egress multicast (MC) service-pool (BP) use-count;
tracking an egress UC plus MC (UC+MC) BP use-counts; and
tracking an egress central processing unit (CPU) queue use-count.

Advantageously, the tracking of the use-count comprises:
tracking an ingress use-count.

Advantageously, the tracking of the ingress use-count comprises at least one step selected from the group consisting of:
tracking an ingress port and priority group (PG) unicast plus multicast (UC+MC) shared use-count;
tracking an ingress port PG headroom use-count;
tracking an ingress port buffer pool (BP) UC+MC shared use-count; and
tracking an ingress BP UC+MC shared use-count.

Advantageously, the tracking of the use-count comprises:
tracking a device use-count.

### BRIEF DESCRIPTION OF THE DRAWINGS

Many aspects of the disclosure can be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views.

FIG. 1 is a flowchart showing one embodiment of a method in which a switch triggers an event based on buffer statistics.

FIG. 2 is a flowchart showing one embodiment of a method for selecting buffer statistics for tracking.

FIG. 3 is a flowchart showing one embodiment of a method for tracking use-counts in a switch.

FIG. 4 is a flowchart showing one embodiment of a method for triggering an event in a switch.

FIG. 5 is a flowchart showing one embodiment of a method for tracking egress statistics of a switch.

FIG. 6 is a flowchart showing one embodiment of a method for tracking ingress statistics of a switch.

### DETAILED DESCRIPTION OF THE EMBODIMENTS

Typically, in packet-switching networks, switches maintain buffer statistics that can be polled by network administrators. Thus, when a switch encounters an issue (e.g., a queue length becoming too long), the network administrator can poll the buffer statistics from the problematic switch to isolate the issues and provide remedial action. Unfortunately, by the time the buffer statistics are polled, the problem has already occurred (e.g., network congestion), and the network administrator's role at that point is to simply fix the problem (re-route network traffic to other switches).

In the alternative, the network administrator can periodically poll the buffer statistics in an effort to avert problems. In short, by reviewing the buffer statistics, the network administrator can reallocate available resources to prevent problems. Unfortunately, for large networks having hundreds (or even thousands) of switches, the amount of polled data can be staggering, and reviewing the sheer volume of data can be a herculean task. This is because polling all of the switches for buffer statistics results in the collection of information for many switches that are operating normally as well as for the few switches that are on the brink of failing. Thus, sifting through the morass of data to identify a potential problem becomes a time-consuming task.

The systems and methods disclosed herein allow for a switch to track buffer statistics, and trigger an event, such as a hardware interrupt or a system snapshot, in response to the buffer statistics reaching a threshold that may indicate an impending problem. Since the switch itself triggers the event to alert the network administrator, the network administrator no longer needs to sift through mountains of data to identify potential problems. Also, since the switch triggers the event prior to a problem arising, the network administrator can provide remedial action prior to a problem occurring. This type of event-triggering mechanism makes the administration of packet-switching networks more manageable.

To implement the event-triggering mechanism, the switching system includes a use-count register that stores a use-count that is associated with a switch buffer. This use-count can be indicative of egress statistics, ingress statistics, or device statistics, and can be monitored on a per-queue basis, a per-port basis, or a per-pool basis. The system also comprises a threshold register that stores relevant threshold values associated with each use-count. A memory management unit (MMU) in the system compares the use-count with the threshold to determine whether the use-count exceeds the threshold. And, when the use-count exceeds the threshold, the MMU triggers an event. The event can be a hardware central processing unit (CPU) interrupt that alerts a network administrator that the switch buffer has exceeded a certain threshold. Also, the event can be a snapshot of the switch when the threshold was exceeded. As such, the event can be an issuance of a command to stop updating the use-counts. As an alternative, the event can simply be the setting of a dedicated bit in a register, which, when polled, brings to the attention of the network administrator the particular switch in which the bit was set.

In addition to implementing the alerting mechanism on an actual buffer, a similar mechanism can be implemented on virtual queues. Thus, rather than monitoring a real queue (or the actual physical port), a virtual queue can be implemented using, for example, a token bucket meter. Since token bucket meters are known in the art, only a brief discussion is provided here. The virtual queue mimics the real queue by shadowing the behavior of the real queue. However, since the virtual queue can be configured to drain at a slower rate than the real queue, the use-counts on the virtual queue will accumulate faster than the use-counts on the actual queue. This results in an earlier detection of potential problems, and further reduces or eliminates any latency impacts from queue build-up.

Having provided a brief overview, reference is now made in detail to the description of the embodiments as illustrated in the drawings. While several embodiments are described in connection with these drawings, there is no intent to limit the disclosure to the embodiment or embodiments disclosed herein. On the contrary, the intent is to cover all alternatives, modifications, and equivalents.

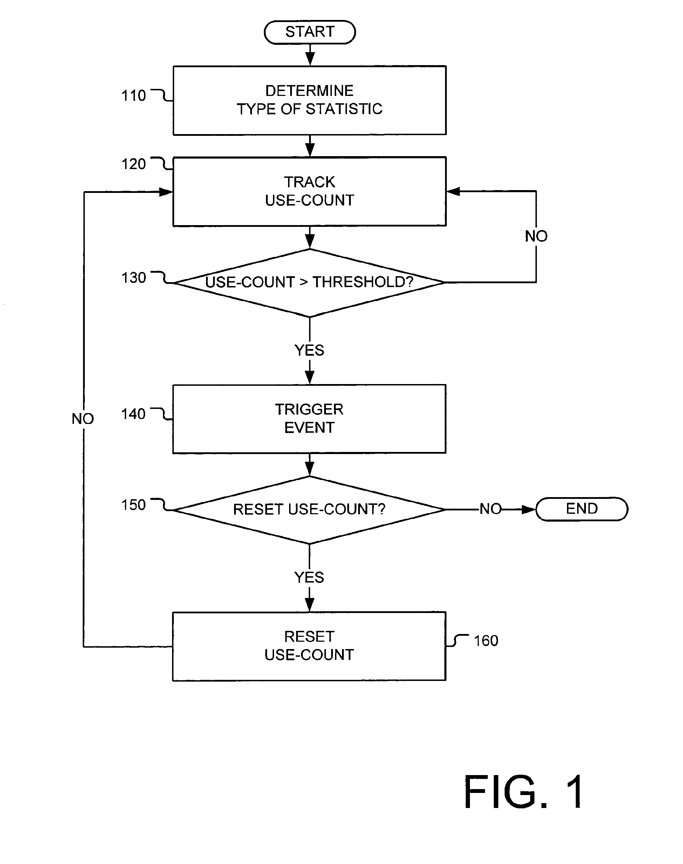

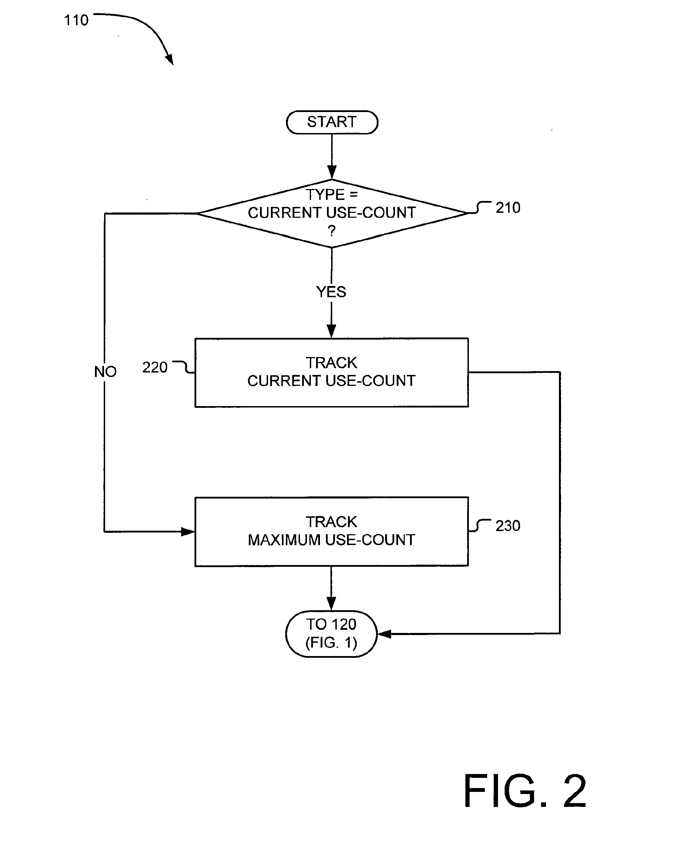

FIG. 1 is a flowchart showing one embodiment of a method in which a switch triggers an event based on buffer statistics. As shown in FIG. 1, the process begins with a determination 110 of a type of statistic (e.g., current use-count, maximum use-count, etc.) that is to be monitored. One embodiment of a process for determining 110 the type of statistic is shown with reference to FIG. 2.

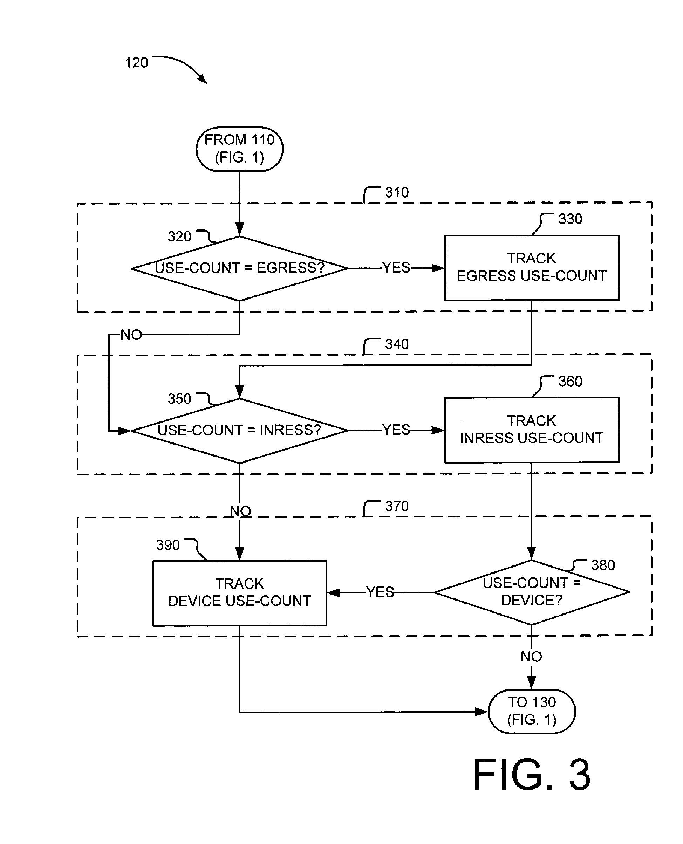

Once the type of statistic has been determined 110, the buffer statistics monitoring mechanism for the switch (simply referred to herein as the switch itself) tracks 120 a use-count for that statistic. The tracking mechanism can be as simple as an incremental count-register that increments the use-count sequentially. One embodiment of a method for tracking 120 use-counts is shown with reference to FIG. 3.

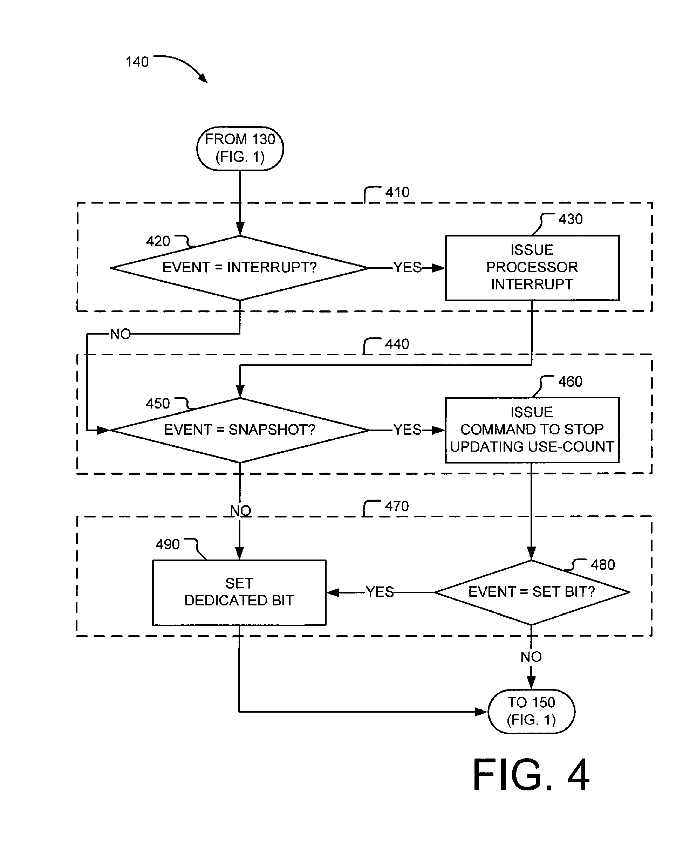

The switch then compares 130 the tracked use-count with a threshold, which can be stored in a threshold register. If the use-count does not exceed the threshold, then the system continues to track 120 the use-count. Alternatively, if the use-count exceeds the threshold, then the system triggers 140 an event (e.g., hardware interrupt, system snapshot, etc.). One embodiment of a process for triggering 140 the event is shown with reference to FIG. 4.

It is worthwhile to note at this time that, in order to obtain acceptable performance, a network administrator or operator may need to tune MMU buffer admission settings, which are often traffic-dependent. In other words, performance of the event-triggering mechanism depends on setting an appropriate threshold value. For example, if the threshold level is set too high, then the use-count can readily exceed an alarming value without triggering the event. Alternatively, if the threshold level is set too low, then even acceptable (and normal) use-counts can unnecessarily trigger the event.

Once the event has been triggered 140, the system then waits 150 for a network administrator to reset the use-counts and resets 160 the use-counts when the reset command is issued. Upon resetting 160 the use-counts, the system returns to tracking 120 the use-counts.

As noted above, FIG. 2 is a flowchart showing one embodiment of a method for selecting buffer statistics for tracking. As shown in FIG. 2, the system determines 210 if the network administrator desires to monitor a current use-count. If so, then the system tracks 220 the current use-count. Alternatively, if the network administrator wishes to trigger events and alerts based on a maximum use-count, then the system tracks 230 the maximum use-count. Tracking of the use-counts are shown in greater detail with reference to FIG. 3.

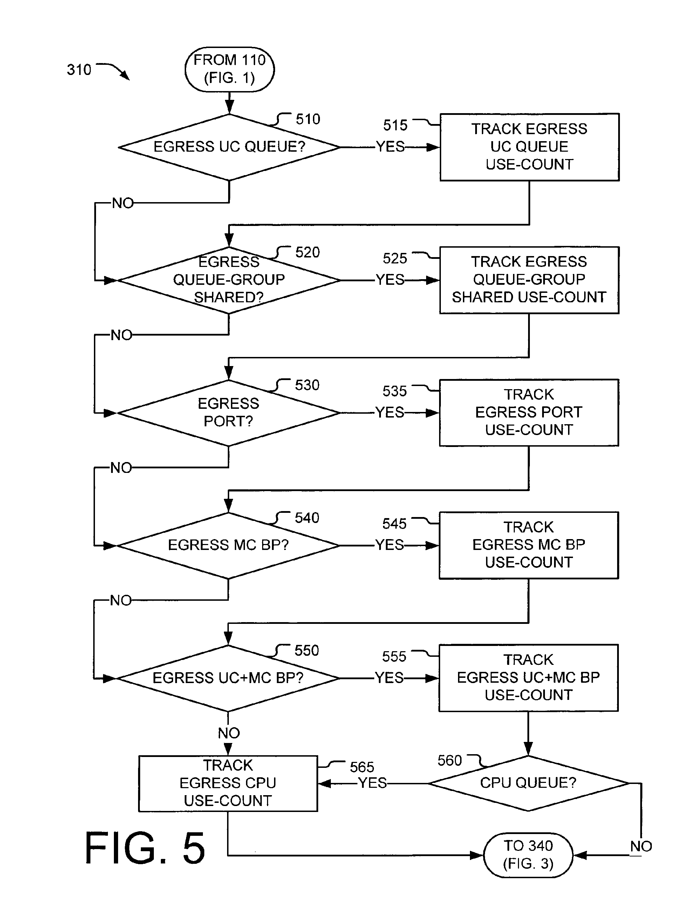

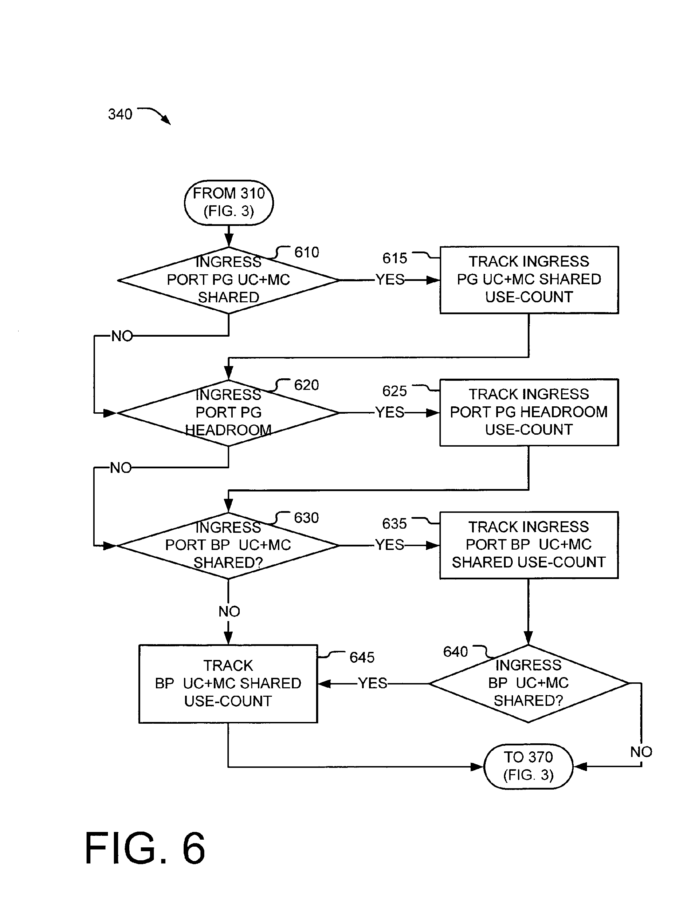

As shown in FIG. 3, the switch tracks egress use-counts 310, ingress use-counts 340, device use-counts 370, or a combination of all of these use-counts. In order to do this, the switch decides 320 if it should track egress use-counts and, if so, tracks 330 egress use-counts. One embodiment of a method for tracking 330 egress use-counts is shown with reference to FIG. 5. The switch then decides 350 if it should track ingress use-counts and, if so, tracks 360 ingress use-counts, either by itself or in combination with the tracking 310 of egress use-counts. One embodiment of a method for tracking 360 ingress use-counts is shown with reference to FIG. 6. The switch then decides 380 if it should track device use-counts and, if so, tracks 390 device use-counts, either by itself or in combination with the tracking 310, 330 of the egress and ingress use-counts. As one can see, there is flexibility in which use-count parameters to track.

FIG. 4 is a flowchart showing one embodiment of a method for triggering an event in a switch. Broadly, the event can be a processor interrupt 410, a system snapshot 440, or simply a triggering of a dedicated bit in a register 470. For some embodiments, the event can be an interrupt trigger with an optional system snapshot, or setting a dedicated bit ("sticky bit") with an optional system snapshot. In one embodiment, the switch decides 420 if a central processing unit (CPU) interrupt should be issued and, if so, issues 430 the CPU interrupt. This interrupt alerts the network administrator that a particular use-count exceeded the threshold. The switch next determines 450 if it should take a snapshot of the switch buffers statistics and, if so, issues 460 a command to stop updating the use-counts. The system snapshot 440 can be done in isolation or in combination with the CPU interrupt 410. The switch can also be configured to set 490 a dedicated bit in a register in response to the triggering event 480. This dedicated bit is indicative of a use-count exceeding its corresponding threshold. Thus, rather than supplying an administrator with unwieldy volumes of information, the single dedicated bit for each switch provides a manageable quantum of information that can be easily digested by the network administrator.

FIG. 5 is a flowchart showing one embodiment of a method for tracking 310 egress statistics of a switch. As noted above, various egress-related statistics can be tracked per queue. In implementation, this per-queue information can further be separated on a per-unicast (UC) or a per multicast (MC) basis. FIG. 5 provides one embodiment in which the UC and MC queues are separated. However, it should be appreciated that such a fine level of granularity is not normally needed. As shown in FIG. 5, a decision 510 to monitor egress unicast (UC) queue use-counts causes the switch to track 515 the egress UC queue use-count. Similarly, a decision 520 to monitor egress queue-group shared use-counts causes the switch to track 525 egress queue-group shared use-counts. Comparable decisions 530, 540, 550, 560 for egress port use-counts, egress multi-cast (MC) buffer pool (BP) use-counts, egress UC plus MC (UC+MC) BP use-counts, and egress CPU use-counts causes the switch to track 535, 545, 555, 565 those use-counts. In other words, one or more of these use-counts are tracked, based on the needs or desires of the network administrator.

Similar to how egress statistics were tracked 310 in FIG. 5, ingress statistics tracking 340 is demonstrated via the flowcharts of FIG. 6. The switch decides 610, 620, 630, 640 whether one or more of the following use-counts should be monitored: ingress priority group (PG) UC+MC use-counts, ingress port PG headroom use-counts, ingress port BP UC+MC shared use-counts, and ingress BP UC+MC shared use-counts. Thereafter, the switch tracks 615, 625, 635, 645 the desired use-counts. As noted with reference to FIG. 5, the UC and MC need not be separated but, alternatively, the monitoring may be done on a per-queue basis.

As one can see, multiple different variables can be monitored by the switch. And, in response to a particular variable exceeding a threshold (or alarm level), the switch triggers a hardware event that alerts the network administrator.

In addition to generally describing methods for triggering an event based on buffer statistics, this disclosure also provides specific parameters for count registers and their values for implementing the tracking of buffer statistics. The decision on whether to store current use-counts or maximum use-counts can be based on a 1-bit register, where a 0-value tracks current use-counts and a 1-value tracks maximum use-counts. Similarly, a 1-bit tracking-enable bit can be set so that a 0-value stops updating or capturing use-counts while a 1-value continues to update use-counts.

The buffer statistics, or the use-count values, are preferably stored in a register, where each sequential increment of the register represents an increase in use-counts, in units of buffers. One having skill in the art will appreciate that the counter size should be sufficient to handle a worst-case total buffer usage. Also, a profile index can be used to identify which threshold corresponds to which use-count value.

Each of the triggering events can also be identified by a 1-bit value. Thus, for example, a 0-value for hardware interrupt may designate that no CPU interrupt be issued, while a 1-value results in the issuance of a CPU interrupt. Similarly, a 0-value for snapshot may result in continual updates of the use-counts, while a 1-value for system snapshot may result in the use-counts being frozen.

For each triggering event, a register can be used to indicate what type of use-count (e.g., egress queue total, egress queue-group shared, egress port BP shared, CPU queue total, etc.) triggered the event, while another register provides the identity of the port, pool, or queue that caused the triggering event. For triggers based on port numbers and buffer pools, an 8-bit register can be employed in which the first six bits represent the port number, while the remaining two bits represent the pool number. As one can see, the size of the registers for storing this information can be customized to accommodate the types of use-counts, the maximum values of the use-counts, the number of devices that can trigger the use-counts, etc. Since there are countless ways in which these use-count registers can be configured, and since one having skill in the art can readily implement the use-count registers from the above-recited description, additional examples with specific bit-values are omitted here.

Suffice it to say that by implementing a procedure in which use-counts are used to trigger an event, a network administrator can readily examine how a packet-switching network is performing on a finer granularity without polling all of the buffer statistics for all of the switches. This type of tracking mechanism allows for a more streamlined review of the network performance, thereby allowing the network administrator to reconfigure network components to optimize system performance.

The memory management unit (MMU) may be implemented in hardware, software, firmware, or a combination thereof. In the preferred embodiment(s), the MMU is implemented in hardware using any or a combination of the following technologies, which are all well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc. In an alternative embodiment, the MMU is implemented in software or firmware that is stored in a memory and that is executed by a suitable instruction execution system.

Any process descriptions or blocks in flow charts should be understood as representing modules, segments, or portions of code which include one or more executable instructions for implementing specific logical functions or steps in the process, and alternate implementations are included within the scope of the preferred embodiment of the present disclosure in which functions may be executed out of order from that shown or discussed, including substantially concurrently or in reverse order, depending on the functionality involved, as would be understood by those reasonably skilled in the art of the present disclosure.

The triggering of the events can be performed by hardware or software code, which comprises an ordered listing of executable instructions for implementing logical functions, can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can contain, store, communicate, propagate, or transport the program for use by or in connection with the instruction execution system, apparatus, or device. The computer-readable medium can be, for example but not limited to, an electronic, magnetic, optical, electromagnetic, infrared, or semiconductor system, apparatus, device, or propagation medium. More specific examples (a nonexhaustive list) of the computer-readable medium would include the following: an electrical connection (electronic) having one or more wires, a portable computer diskette (magnetic), a random access memory (RAM) (electronic), a read-only memory (ROM) (electronic), an erasable programmable read-only memory (EPROM or Flash memory) (electronic), an optical fiber (optical), and a portable compact disc read-only memory (CDROM) (optical). Note that the computer-readable medium could even be paper or another suitable medium upon which the program is printed, as the program can be electronically captured via, for instance, optical scanning of the paper or other medium, then compiled, interpreted or otherwise processed in a suitable manner if necessary, and then stored in a computer memory.

Although exemplary embodiments have been shown and described, it will be clear to those of ordinary skill in the art that a number of changes, modifications, or alterations to the disclosure as described may be made. For example, while use-counts are disclosed herein, it should be appreciated that packet rates can be monitored in a similar fashion. All such changes, modifications, and alterations should therefore be seen as within the scope of the disclosure.

## Claims

1. A system, comprising:
a use-count register to store a use-count associated with a buffer;
a threshold register to store a threshold corresponding to the use-count; and
a memory management unit (MMU) to compare the use-count with the threshold, the MMU to trigger an event when the use-count exceeds the threshold.

2. The system of claim 1, the use-count register to further store an egress use-count.

3. The system of claim 2, the egress use-count being at least one selected from the group consisting of:
an egress unicast (UC) queue use-count;
an egress queue-group shared use-count;
an egress port use-count;
an egress multicast (MC) buffer-pool (BP) use-count;
an egress UC plus MC (UC+MC) BP use-counts; and
an egress central processing unit (CPU) queue use-count.

4. The system of any preceding claim, the use-count register to further store an ingress use-count.

5. The system of claim 4, the ingress use-count being at least one selected from the group consisting of:
an ingress port and priority group (PG) unicast plus multicast (UC+MC) shared use-count;
an ingress port PG headroom use-count;
an ingress port buffer pool (BP) UC+MC shared use-count; and
an ingress BP UC+MC shared use-count.

6. The system of any preceding claim, the use-count register to further store a device use-count.

7. The system of any preceding claim, the event being a hardware central processing unit (CPU) interrupt.

8. The system of any preceding claim, the event being a command to stop updating the use-count.

9. The system of any preceding claim, the event being a dedicated bit being set to indicate that the use-count exceeded the threshold.

10. In a network switch, a method comprising:
tracking a use-count associated with a buffer;
determining whether the tracked use-count exceeds a predefined threshold; and
triggering an event when the use-count exceeds the predefined threshold.

11. The method of claim 10, the triggering of the event comprising:
issuing a central processor unit (CPU) interrupt.

12. The method of claim 10 or 11, the triggering of the event comprising:
stopping updates of the use-count.

13. The method of any of claims 10 to 12, the triggering of the event comprising:
setting a dedicated bit to indicate that the use-count exceeded the predefined threshold.

14. The method of any of claims 10 to 13, the tracking of the use-count comprising:
tracking an egress use-count.

15. In a switch having a buffer, a method comprising:
(a) determining a type of statistic, the type of statistic being at least one selected from the group consisting of:
(a1) current use-count; and
(a2) maximum use-count;
(b) tracking a use-count for the determined type of statistic, the use-count being at least one selected from the group consisting of:
(b1) an egress use-count;
(b2) an ingress use-count; and
(b3) a device use-count;
(c) comparing the use-count with a corresponding threshold; and
(d) triggering an event when the use-count exceeds the corresponding threshold.
